# EUROPÄISCHE PATENTSCHRIFT

(11) **EP 4 091 240 B1**
(45) Veröffentlichungstag und Bekanntmachung des Hinweises auf die Patenterteilung: **27.12.2023**
(21) Anmeldenummer: 21708149.6
(22) Anmeldetag: 17.02.2021
(51) Int. Cl.: H02K 17/16, H02K 1/28, H02K 15/16

(54) **ROTOR EINER DYNAMOELEKTRISCHEN ROTATORISCHEN MASCHINE, DYNAMOELEKTRISCHE MASCHINE MIT EINEM ROTOR UND VERFAHREN ZUR HERSTELLUNG DES ROTORS**
ROTOR OF A DYNAMO-ELECTRICMACHINE, DYNAMO-ELECTRIC MACHINE WITH SUCH A ROTOR AND MANUFACTURING METHOD OF SUCH A ROTOR
ROTOR D'UNE MACHINE DYNAMO-ÉLECTRIQUE, MACHINE DYNAMO-ÉLECTRIQUE COMPRENANT D'UN TEL ROTOR ET PROCÉDÉ DE FABRICATION D'UN TEL ROTOR

(30) Priorität: 18.03.2020 EP 20163908
(43) Veröffentlichungstag der Anmeldung: 23.11.2022
(73) Patentinhaber: Innomotics GmbH, 90441 Nürnberg (DE); Valeo eAutomotive Germany GmbH, 91056 Erlangen (DE)
(72) Erfinder: BUETTNER, Mario, 97616 Neustadt (Saale) (DE); BÜTTNER, Klaus, 97618 Hollstadt (DE); KIRCHNER, Klaus, 97645 Ostheim (DE); WARMUTH, Matthias, 97618 Windshausen (DE)
(74) Vertreter: Siemens Patent Attorneys
(86) Internationale Anmeldenummer: PCT/EP2021/053883
(87) Internationale Veröffentlichungsnummer: WO 2021/185522

(56) Entgegenhaltungen:
- EP-A2- 2 849 320
- WO-A1-2007/000413
- WO-A2-2014/124762
- JP-A- H02 273 059
- US-A1- 2015 188 397

## Beschreibung

Die Erfindung betrifft einen Rotor einer dynamoelektrischen rotatorischen Maschine, eine dynamoelektrische Maschine mit einem Rotor und ein Verfahren zur Herstellung des Rotors.

Rotoren von Asynchronmaschinen werden oftmals als Kurzschlussläufer ausgeführt. Der Rotor weist hierbei einen Käfig umfassend Käfigstäbe und jeweils einen Kurzschlussring an den jeweiligen axialen Enden der Käfigstäbe auf. Aufgrund einer geringen Materialfestigkeit verformt sich jedoch der Kurzschlussring bei hohen Rotationsgeschwindigkeiten.

WO 2007/000413 A1 betrifft eine Asynchronmaschine mit einem Ständer oder einem Käfigläufer, wobei der Käfigläufer eine Welle und ein Blechpaket aufweist und sich in dem Blechpaket Läuferstäbe befinden, welche an beiden Enden des Blechpakets durch die Öffnungen je einer Endplatte geführt sind und mit einem Kurzschlussring abgeschlossen sind, welcher die Enden der Läuferstäbe einer Seite des Käfigläufers elektrisch leitend verbindet, wobei jede Endplatte einen umlaufenden Vorsprung aufweist, welcher den Kurzschlussring an dessen Aussenseite zumindest teilweise formschlüssig abdeckt und wobei jede Endplatte einen Teil des Läuferstabs und einen Teil des Kurzschlussrings enthält.

JP H02 273059 A zeigt Folgendes: Ein Rotor ist mit Rotorkernen, sekundären Leiterkurzschlussringen, einer Leiterstange und einer Drehwelle versehen. Alle Außenumfänge der Sekundärleiterkurzschlussringe sind durch die ringförmig vorstehenden Traufen der Verstärkungsringe abgedeckt, die wie die Rotorkerne durch Presspassung an der Drehwelle befestigt sind. Der Außenumfang der Kurzschlussringe wird durch die Verstärkungsringe derart verstärkt, dass die Verschiebung der Kurzschlussringe unterdrückt wird und der Betrag der Verschiebung des Leiterstabs im Kern mit dem des Kurzschlussrings übereinstimmen kann. Bei dieser Methode wird nie eine übermäßige Spannung auf einen Verbindungsabschnitt zwischen dem Kurzschlussring und dem Leiterstab ausgeübt. Dementsprechend kann ein Scherbruch bei Hochgeschwindigkeitsrotation verhindert werden und eine Hochgeschwindigkeitsrotation bis zur Rotationsgrenze, die durch den Fliehkraftbruch eines für den Rotorkern verwendeten Materials bestimmt wird, kann durchgeführt werden.

In WO 2014/124762 A2 wird ein Käfigläufer für eine Elektromaschine mit geschlossenem Kurzschlussring vorgestellt. Der Käfigläufer weist einen Stirnbereich und einen gegossenen Kurzschlussring auf. Der Kurzschlussring ist dabei im Stirnbereich angeordnet. Ferner ist im Stirnbereich ein Befestigungselement vorgesehen, das einen Formschluss zwischen dem Stirnbereich und dem Kurzschlussring ermöglicht.

Gemäß EP 2 849 320 A2 umfasst ein Verfahren zum Herstellen eines Käfigläuferrotors einer Asynchronmaschine: Bereitstellen eines Blechpaket mit einer Mehrzahl von Öffnungen zur Aufnahme von Stäben eines Läuferkäfigs; Positionieren eines Gießformteils für einen Kurzschlussring an einer Stirnseite des Blechpakets; und Gießen der Stäbe und des Kurschlussrings. Das Gießformteil wird dabei an das Blechpaket angegossen und verbleibt zur Stabilisierung des Kurzschlussrings am Käfigläuferrotor.

US 2015/188397 offenbart Folgendes: A1 Ein Rotor umfasst einen gestapelten Kern mit einer Vielzahl von Schlitzen, die an einer Innenseite davon ausgebildet sind, eine Vielzahl von Rotorstangen, die in die Vielzahl von Schlitzen eingesetzt sind, ein Paar von Endringen, die zusammengebaut und an gegenüberliegenden Enden der Rotorstangen befestigt sind, ein Paar von Haltern befestigt an gegenüberliegenden äußeren Endflächen der Rotorstäbe in zusammengebauter und befestigter Weise, und eine Welle, die in das Paar von Endringen eingesetzt ist.

Die DE 10 2013 218 473 A1 beschreibt ein Verfahren zum Herstellen eines Käfigläuferrotors einer Asynchronmaschine umfassend: Bereitstellen eines Blechpakets mit einer Mehrzahl von Öffnungen zur Aufnahme von Stäben eines Läuferkäfigs; Positionieren eines Gießformteils für einen Kurzschlussring an einer Stirnseite des Blechpakets; und Gießen der Stäbe und des Kurschlussrings. Das Gießformteil wird dabei an das Blechpaket angegossen und verbleibt zur Stabilisierung des Kurzschlussrings am Käfigläuferrotor.

Nachteilig ist hierbei jedoch, dass eine Stützfunktion des eingegossenen Gießformteils nach einem Erkalten nicht mehr gegeben ist. Da das Material für den Kurzschlussrings während des Erkaltens stark schrumpft, entsteht ein Hohlraum zwischen Kurzschlussring und Gießformteil. Im Betrieb hat dies eine Verformung des Kurzschlussrings aufgrund der Fliehkräfte zur Folge.

Eine Aufgabe der Erfindung kann folglich darin gesehen werden, eine Stabilisierung des Kurzschlussrings zu verbessern.

Die Lösung der Aufgabe gelingt durch Anspruch 1, d. h. einen Rotor einer dynamoelektrischen rotatorischen Maschine, aufweisend:
- einen konzentrisch zur Rotorachse angeordneten Rotorkern, wobei der Rotorkern Nuten aufweist, wobei die Nuten mit zumindest einem elektrisch leitenden Material gefüllt sind,
- am vorderen axialen Ende der Nuten einen konzentrisch zur Rotorachse angeordneten vorderen Ring, wobei der vordere Ring zumindest ein elektrisch leitendes Material aufweist,
- am hinteren axialen Ende der Nuten einen konzentrisch zur Rotorachse angeordneten hinteren Ring, wobei der hintere Ring zumindest ein elektrisch leitendes Material aufweist, wobei eine dem Rotorkern abgewandte Fläche des vorderen und/oder hinteren Rings zumindest teilweise eine Schrägung in Axialrichtung von einem Außenumfang zu einem Innenumfang des Rings mit einem Schrägungswinkel aufweist, wobei der Schrägungswinkel (α) einen Wert von 3° bis 30° aufweist,
- wenigstens ein Stützelement, wobei das Stützelement derart ausgebildet ist, dass das Stützelement zumindest teilweise formschlüssig mit dem Ring verbunden ist, wobei das Stützelement axial an den Ring angepresst ist, wobei das Stützelement auf eine Welle abgestützt ist, wobei ein radiales Ende des Stützelements mit einem radialen Ende des Rings abschließt.

Die Lösung der Aufgabe gelingt ferner durch Anspruch 10, d.h. eine dynamoelektrische rotatorische Maschine, insbesondere Asynchronmaschine, aufweisend einen derartigen Rotor.

Der Rotorkern ist vorzugsweise ein Materiallagen aufweisendes Gefüge, wobei die Materiallagen miteinander genietet, geschweißt, stanzpaketiert, geklebt und/oder verbacken sind.

Die Materiallagen sind vorteilhaft Bleche. Dennoch sind auch andersartige Materiallagen denkbar.

Der Rotorkern ist vorteilhaft ein Blechpaket.

Die Nuten sind vorzugsweise geschlossen. Es sind jedoch auch halb-offene und offene Nuten möglich.

Die gefüllten Nuten stellen Käfigstäbe des Kurzschlusskäfigs dar. Der Ring stellt einen Kurzschlussring des Kurzschlusskäfigs dar.

Vorzugsweise werden die Nuten mittels Druckguss mit dem elektrisch leitenden Material gefüllt. Vorzugsweise werden der vordere und/oder der hintere Ring mittels Druckguss mit dem elektrisch leitenden Material gebildet.

Alternativ werden die Nuten mittels 3D-Druck mit dem elektrisch leitenden Material gefüllt. Alternativ werden der vordere und/oder der hintere Ring mittels 3D-Druck mit dem elektrisch leitenden Material gebildet. Es sind jedoch auch andere Verfahren denkbar.

Alternativ können auch stranggezogene Stäbe, beispielsweise Kupferstäbe, in die Nuten eingelegt werden und der jeweilige Ring wird, beispielsweise mittels Druckguss oder 3D-Druck, gebildet.

Vorteilhaft ist der Ring mit den gefüllten Nuten stoffschlüssig verbunden.

Vorzugsweise ist das elektrisch leitende Material Kupfer oder Aluminium. Dies ist vorteilhaft, da dadurch ein sehr hoher Wirkungsgrad erreicht werden kann. Jedoch ist auch eine Kupferlegierung oder eine Aluminiumlegierung möglich.

Aluminium weist vorteilhaft eine temperaturabhängige Zugfestigkeit von 20 bis 60 N/mm² auf.

Es ist denkbar, dass der Ring und/oder die Nuten Einlegeteile aufweisen. Diese Einlegeteile können ein elektrisch nichtleitendes Material aufweisen.

Stirnseitig betrachtet ist es möglich, dass der Ring im Umlaufsinn mehr als einen Schrägungswinkel aufweist.

Vorteilhaft liegt der Ring am Rotorkern an und es liegt keine Beabstandung vor. D. h. vorteilhaft liegt der Ring an der letzten Materiallage, vorzugsweise am letzten Blech, an oder an einem Druckring, welcher eine Paketierung der Materiallagen ermöglicht.

In einer vorteilhaften Ausführungsform weist das Stützelement an einer dem Ring zugewandten Fläche wenigstens einen Abschnitt auf, welcher eine Schrägung in Axialrichtung vom Außenumfang zum Innenumfang mit einem zum Schrägungswinkel wechselwinkligen Schrägungswechselwinkel aufweist.

Ring und Stützelement sind somit gut per Formschluss verbindbar.

Die Nuten können geschrägt oder nicht-geschrägt ausgeführt sein.

Erfindungsgemäß weist der Schrägungswinkel einen Wert von 3° bis 30° auf.

Dieser Wert ist vorteilhaft, da dadurch eine optimale Stabilisierung des Kurzschlussrings erreicht werden kann.

Vorzugsweise weist das Material, welches im Ring und/oder den Nuten vorhanden ist, eine größere elektrische Leitfähigkeit auf als das Material, welches im Stützelement vorhanden ist.

Vorzugsweise weist das Material, welches im Stützelement vorhanden ist, eine größere mechanische Zugfestigkeit auf als das Material, welches im Ring und/oder den Nuten vorhanden ist.

In einer vorteilhaften Ausführungsform weist das Stützelement ein Material mit einer Zugfestigkeit von 800 N/mm² bis 1200 N/mm², insbesondere 1000 N/mm², auf.

Die beschriebene Zugfestigkeit erlaubt einen Einsatz der Rotoren im Hochdrehzahlbereich, beispielsweise im Bereich von 1500 bis 3000 Umdrehungen pro Minute (U/min) bei einem Rotoraußendurchmesser von 100 bis 200 mm.

In einer vorteilhaften Ausführungsform weist das Stützelement Stahl auf. Hierzu eignet sich beispielsweise ein Vergütungsstahl, der Chrom und/oder Nickel und/oder Molybdän aufweist. Es eignet sich ferner auch ein Einsatzstahl, der Chrom und/oder Nickel und/oder Molybdän aufweist.

Das Stützelement kann überdies auch Titan aufweisen.

Stahl eignet sich aufgrund seiner hohen Festigkeit, der guten Härtbarkeit, Steifheit und Bruchdehnung besonders gut. Zudem ist Stahl günstig und lässt sich warm oder kalt umformen.

In einer vorteilhaften Ausführungsform weist die dem Rotorkern abgewandte Fläche des vorderen und/oder hinteren Rings wenigstens einen ersten Bereich aufweisend eine erste Teilschrägung in Axialrichtung von einem Außenumfang zu einem Innenumfang des Rings mit einem ersten Teilschrägungswinkel und wenigstens einen zweiten Bereich aufweisend eine zweite Teilschrägung in Axialrichtung von einem Außenumfang zu einem Innenumfang des Rings mit einem zweiten Teilschrägungswinkel auf wobei sich der erste Teilschrägungswinkel und der zweite Teilschrägungswinkel unterscheiden.

In einer vorteilhaften Ausführungsform weist das Stützelement an der dem Ring zugewandten Fläche wenigstens einen ersten Bereich auf, welcher eine Schrägung in Axialrichtung vom Außenumfang zum Innenumfang mit einem zum ersten Teilschrägungswinkel wechselwinkligen Teilschrägungswechselwinkel aufweist, wobei das Stützelement an der dem Ring zugewandten Fläche wenigstens einen zweiten Bereich aufweist, welcher eine Schrägung in Axialrichtung vom Außenumfang zum Innenumfang mit einem zum zweiten Teilschrägungswinkel wechselwinkligen Teilschrägungswechselwinkel aufweist.

Vorzugsweise kommen wenigstens diejenigen Bereiche des Rings und des Stützelements in Eingriff, auf welche eine Fliehkraft im Betrieb wirkt.

Diese Ausführungsform ermöglicht eine höhere Aufnahme einer Radialkomponente.

In einer vorteilhaften Ausführungsform ist das Stützelement mittels Presspassung mit einer Welle verbindbar.

Dies ist vorteilhaft, da dadurch das Stützelement zugleich als Wuchtelement dienen kann.

Alternativ ist das Stützelement auch mittels eines Festigungsrings mit der Welle verbindbar. Hierbei ist beispielsweise der Festigungsring, z. B. mittels Presspassung, mit der Welle verbindbar und das Stützelement wird zwischen Ring und Festigungsring eingeklemmt. Auch andere Ausführungen sind denkbar.

In einer vorteilhaften Ausführungsform weist das Stützelement wenigstens eine Aussparung und/oder wenigstens eine Aufdickung, insbesondere zur Beseitigung einer Unwucht, auf.

Eine Aussparung ist beispielsweise eine Bohrung, eine Aufdickung ist beispielsweise ein Materialauftrag an bestimmten Stellen.

Eine Aussparung, die durch negatives Wuchten erlangt wird, wird auch Abbohrung genannt. Dies ist besonders vorteilhaft, da eine derartige Rotorauswuchtung automatisiert erfolgen kann, indem eine Unwucht berechnet und eine entsprechende Bohrung mit Durchmesser und Bohrungstiefe ausgeführt werden kann.

Die Aufdickung gelingt beispielsweise durch ein Schweißverfahren, z. B. durch Reibschweißen vorgefertigter Zylinder. Hierbei werden vorzugsweise das Stützelement und beispielsweise ein vorgefertigter Zylinder unter Druck relativ zueinander bewegt, wobei sich Stützelement und Zylinder an den Kontaktflächen berühren. Durch die entstehende Reibung kommt es zur Erwärmung und Plastifizierung des Materials.

Die Aussparung kann auch ein Kanal zur Hinterlüftung des Rotors sein.

Die Lösung der oben beschriebenen Aufgabe gelingt ferner durch Anspruch 10, d.h. ein Verfahren zur Herstellung eines derartigen Rotors, aufweisend einen konzentrisch zur Rotorachse angeordneten Rotorkern, wobei der Rotorkern Nuten aufweist, für eine dynamoelektrische rotatorische Maschine, mit folgenden Schritten:
- Bereitstellung des Rotorkerns,
- Füllen der Nuten mit zumindest einem elektrisch leitenden Material,
- Aufbringen von zumindest einem elektrisch leitenden Material am vorderen und hinteren axialen Ende der Nuten zur Bildung eines vorderen bzw. hinteren Rings mittels einer Gestaltungsvorrichtung, wobei die Gestaltungsvorrichtung derart ausgeführt ist, dass eine dem Rotorkern abgewandte Fläche des vorderen und/oder hinteren Rings zumindest teilweise eine Schrägung in Axialrichtung von einem Außenumfang zu einem Innenumfang des Rings mit einem Schrägungswinkel erhält, wobei der Schrägungswinkel einen Wert von 3° bis 30° aufweist,
- Anpressen eines Stützelements, wobei das Stützelement axial an den Ring angepresst wird, wobei das Stützelement auf eine Welle abgestützt ist und wobei ein radiales Ende des Stützelements mit einem radialen Ende des Rings abschließt.

Das Füllen der Nuten gelingt vorteilhaft durch Einsetzen von vorgefertigten Stäben, insbesondere Kupferstäben, oder durch Druckguss, z. B. Aluminiumdruckguss, oder eine Kombination davon. Ferner ist auch denkbar, andersartige Einlegeteile einzufügen. Ferner ist das Füllen der Nuten auch mittels 3D-Druck möglich.

Das Bilden des Rings gelingt vorteilhaft mittels Druckguss, z. B. Aluminiumdruckguss. Ferner ist auch denkbar, Einlegeteile, z. B. aus Aluminium oder einem anderen Material, einzufügen. Ferner ist das Bilden des Rings auch mittels 3D-Druck möglich.

In einer vorteilhaften Ausführungsform wird das Stützelement auf eine Welle aufgeschrumpft.

In einer vorteilhaften Ausführungsform wird das Stützelement zum Aufschrumpfen auf eine Temperatur von 100 bis 140°C, vorzugsweise 120°C, erwärmt.

Erfindungsgemäß wird das Stützelement in Axialrichtung auf den Ring gepresst.

In einer vorteilhaften Ausführungsform wird das Stützelement mit einer Fügekraft von 20 bis 40 t, vorzugsweise 30 t, aufgepresst.

Die Erfindung eignet sich besonders gut für Asynchronmaschinen mit Kurzschlussläufer. Derartige dynamoelektrische rotatorische Maschinen finden in unterschiedlichen Gebieten Anwendung, wie z. B. bei Ventilatoren, Pumpen, Kompressoren, Werkzeugmaschinen sowie bei Antrieben für Elektro- und Hybrid-Fahrzeuge. Die Erfindung eignet sich zudem gut für Motoren für Hochleistungsgebläse.

Die Erfindung eignet sich besonders gut für dynamoelektrische rotatorische Maschinen im Hochdrehzahlbereich.

Die Erfindung eignet sich für reine Asynchronmaschinen, ist jedoch auch für andere dynamoelektrische rotatorische Maschinen geeignet, z. B. für Hybridmaschinen wie beispielsweise für eine Asynchronmaschine mit Permanentmagneten.

Die Asynchronmaschine mit Permanentmagneten fährt asynchron auf eine hohe Drehzahl hoch und fällt dann in einen Synchronbetrieb. Dies ist vorteilhaft, da dadurch hohe Wirkungsgrade und Leistungen erzielt werden können.

Die Erfindung bietet den Vorteil, dass die Rotoren bei einer Umfangsgeschwindigkeit betrieben werden können, welche 90 m/s übersteigt, ohne eine Verformung der Kurzschlussringe befürchten zu müssen.

Sogar eine Umfangsgeschwindigkeit von 150 m/s ist möglich. Eine derartige Umfangsgeschwindigkeit am Rotoraußenumfang ist insbesondere in der Industrietechnik sowie bei Antrieben in der Elektromobilität nötig.

Im Folgenden wird die Erfindung anhand der in den Figuren dargestellten Ausführungsbeispiele näher beschrieben und erläutert. Es zeigen:
- FIG 1: eine erste Ausführung eines erfindungsgemäßen Rotors,
- FIG 2: eine zweite Ausführung des Rotors,
- FIG 3: eine dritte, nicht von der Erfindung umfasste Ausführung des Rotors,
- FIG 4: eine vierte Ausführung des Rotors,
- FIG 5: eine fünfte Ausführung des Rotors,
- FIG 6: den Rotor aus FIG 5, betrachtet von einer Stirnseite,
- FIG 7: eine dynamoelektrische rotatorische Maschine mit dem Rotor und
- FIG 8: ein Verfahren zur Herstellung des Rotors.

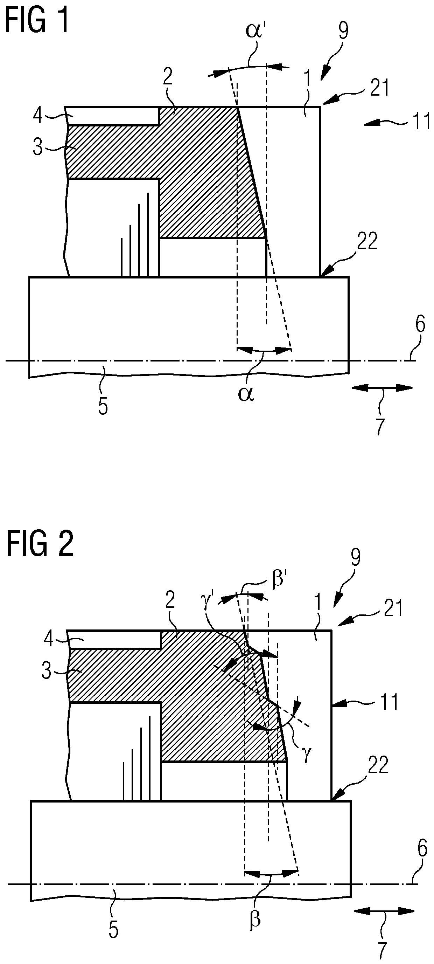

Die FIG 1 zeigt eine erste Ausführung eines erfindungsgemäßen Rotors 11.

Die FIG 1 zeigt einen konzentrisch zur Rotorachse 6 angeordneten Rotorkern 4, wobei der Rotorkern 4 Nuten 3 aufweist, wobei die Nuten 3 mit einem elektrisch leitenden Material gefüllt sind. Die FIG 1 zeigt einen am hinteren axialen Ende 9 der Nuten 3 konzentrisch zur Rotorachse 6 angeordneten Kurzschlussring 2, aufweisend ein elektrisch leitendes Material.

Eine dem Rotorkern 3 abgewandte Fläche des Rings 2 weist in der Figur eine Schrägung in Axialrichtung 7 von einem Außenumfang 21 zu einem Innenumfang 22 des Rings 2 mit einem Schrägungswinkel α auf.

Die Figur zeigt ein Stützelement 1, welches zumindest teilweise mit dem Ring 2 verbunden ist. Der Rotorkern 4 sowie das Stützelement 1 grenzen in der Figur an eine Welle 5.

Das Stützelement 1 weist an einer dem Ring 2 zugewandten Fläche einen Abschnitt auf, welcher eine Schrägung in Axialrichtung 7 vom Außenumfang 21 zum Innenumfang 22 mit einem zum Schrägungswinkel α wechselwinkligen Schrägungswechselwinkel α' auf. Der Schrägungswinkel α weist in der Figur einen Wert von 13° auf. Vorzugsweise liegt ein Wert des Schrägungswinkels α in einem Bereich von 3° bis 30°, insbesondere 10° bis 20°. Die Figur zeigt, dass ein radialer Formschluss zwischen Kurzschlussring 2 und Stützelement 1 vorliegt.

Die Erfindung bietet den Vorteil, dass eine erhöhte Drehzahleignung für einen Rotor 11, insbesondere einer Asynchronmaschine, gegeben ist. Unter Drehzahlbelastung ist kein Abkippen des Kurzschlussrings oder ein Fließen des Kurzschlussringmaterials zu befürchten.

Das Stützelement 1 ist axial an den Kurzschlussring 2 angepresst. Das Stützelement 1 ist auf die Welle 5 abgestützt. Somit ist ein mechanisches Verspannen von Welle 5 zum Stützelement 1 und somit zum Kurzschlussring 2 gegeben.

FIG 2 zeigt eine zweite Ausführung des Rotors 11. Die FIG 2 zeigt, dass die dem Rotorkern 4 abgewandte Fläche des Rings 2 wenigstens einen ersten Bereich, aufweisend eine erste Teilschrägung in Axialrichtung 7 von dem Außenumfang 21 zum Innenumfang 22 des Rings 2 mit einem ersten Teilschrägungswinkel β, und wenigstens einen zweiten Bereich, aufweisend eine zweite Teilschrägung in Axialrichtung 7 vom Außenumfang 21 zum Innenumfang 22 des Rings 2 mit einem zweiten Teilschrägungswinkel γ aufweist, wobei sich der erste Teilschrägungswinkel β und der zweite Teilschrägungswinkel γ unterscheiden.

Die Figur zeigt drei erste Bereiche mit dem Teilschrägungswinkel β und zwei zweite Bereiche mit dem Teilschrägungswinkel γ.

Die Figur zeigt ferner das Stützelement 1. Die Figur zeigt, dass das Stützelement 1 an der dem Ring 2 zugewandten Fläche wenigstens einen ersten Bereich aufweist, welcher eine Schrägung in Axialrichtung 7 vom Außenumfang 21 zum Innenumfang 22 mit einem zum ersten Teilschrägungswinkel β wechselwinkligen Teilschrägungswechselwinkel β` aufweist, wobei das Stützelement 1 an der dem Ring 2 zugewandten Fläche wenigstens einen zweiten Bereich aufweist, welcher eine Schrägung in Axialrichtung 7 vom Außenumfang 21 zum Innenumfang 22 mit einem zum zweiten Teilschrägungswinkel γ wechselwinkligen Teilschrägungswechselwinkel γ' aufweist.

In der Figur sind hierbei drei erste Bereich mit dem Teilschrägungswinkel β` und zwei zweite Bereiche mit dem Teilschrägungswinkel γ' gezeigt.

Eine derartige Ausführung der Erfindung dient einer höheren Aufnahme einer Radialkraftkomponente.

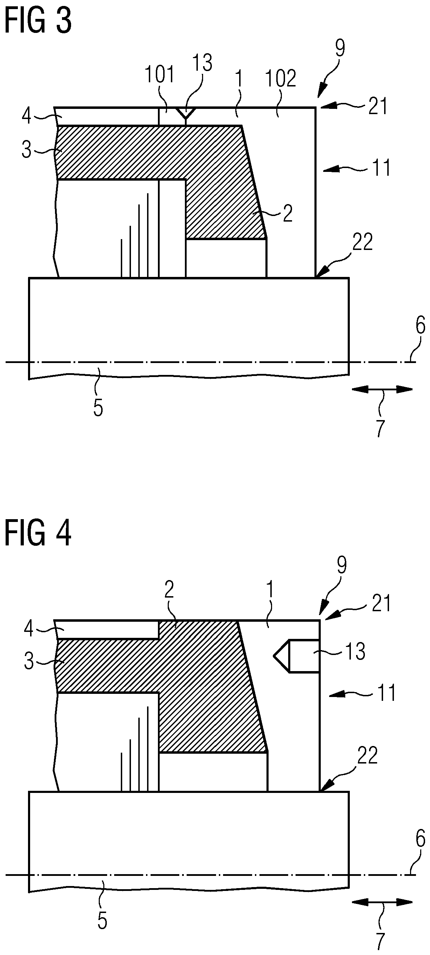

FIG 3 zeigt eine dritte, nicht von der Erfindung umfasste Ausführung des Rotors 11. Die gezeigte Ausführung eignet sich für besonders hohe Umfangsgeschwindigkeiten am Außenumfang des Rotors 11. Es sind Umfangsgeschwindigkeiten von bis zu 180 m/s möglich.

Die Figur zeigt ein Stützelement 1, welches eine innere Stützscheibe 101 und eine äußere Stützvorrichtung 102 aufweist. In der Figur sind die innere Stützscheibe 101 und die äußere Stützvorrichtung 102 stoffschlüssig verbunden, vorzugsweise mittels Schweißung.

Vorzugsweise ist eine Verbindung der Stützscheibe 101 und der Stützvorrichtung 102 am oder zumindest in der Nähe des Außenumfangs ausgeführt. Die innere Stützscheibe 101 weist vorteilhaft Aussparungen auf, wobei eine Anzahl der Aussparungen einer Anzahl der Nuten 3 des Rotorkerns 4 entspricht.

Vorteilhaft wird die innere Stützscheibe 101 bei der Bildung des Rings 2 eingebracht. Vorzugsweise wird die innere Stützscheibe 101 während der Bildung des Rings 2 mittels Druckguss mit eingegossen. Nach Erkalten wird die äußere Stützscheibe 102, insbesondere mittels Fügekraft in Axialrichtung, aufgebracht. Vorzugsweise wird anschließend die Schweißung durchgeführt. Somit liegt eine Schweißnaht am Außenumfang des Rotors 11 vor. Die Schweißung ist optional.

Die FIG 4 zeigt eine vierte Ausführung des Rotors 11. Zusätzlich zu der bereits in FIG 1 beschriebenen Ausführung, weist die Ausführung der FIG 4 eine Aussparung 13 im Stützelement 1 auf, welche zur Beseitigung einer Unwucht dient.

Der Vorteil hierbei ist, dass ein Wuchten nicht, wie bisher im Kurzschlussring vorgenommen wird, sondern im Stützelement 1. Somit weist das Stützelement 1 zusätzlich eine Funktion als Wuchtscheibe auf.

Zudem ist es möglich, eine Aufdickung am Stützelement 1 anzubringen, welche der Beseitigung einer Unwucht dient. Dies ist in der Figur nicht dargestellt.

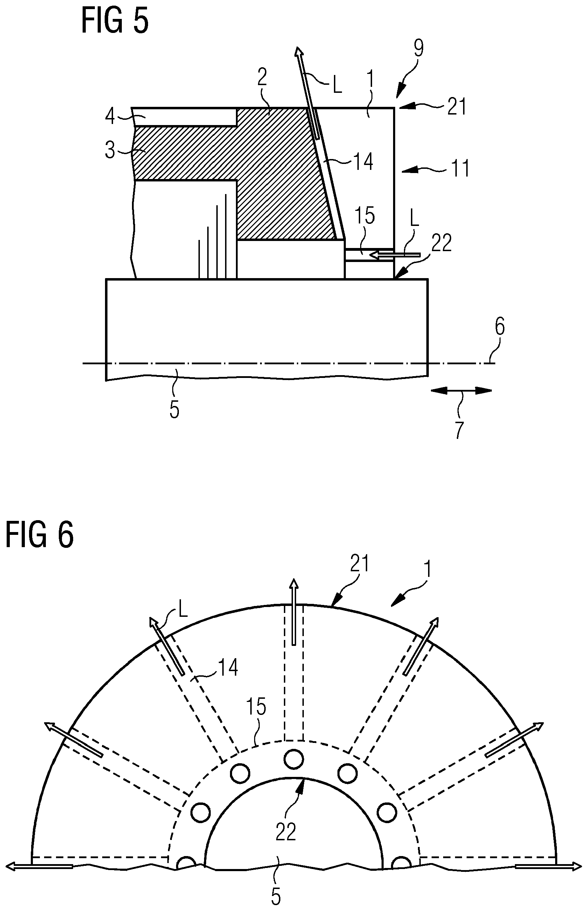

FIG 5 zeigt eine fünfte Ausführung des Rotors 11. Die Figur zeigt Kanäle 14 und 15, welche einer Hinterlüftung des Rotors 11 dienen. Dies wird in FIG 6 genauer erläutert.

FIG 6 zeigt den Rotor 11 aus FIG 5, betrachtet von einer Stirnseite. Die beiden Figuren zeigen Kanäle 14 und 15, welche einer Hinterlüftung des Rotors 11 dienen. Die Kanäle 14 können beispielsweise eingegossen werden. Die Kanäle 15 sind in dem Stützelement 1 vorhanden. Durch die Aussparungen wird Luft während der Rotation des Rotors 11 angesaugt. Dies dient der Hinterlüftung.

Durch diese Aussparungen im Stützelement 1 wird die Luft bei Rotation angesaugt, die am Außenumfang des Kurzschlussrings 2 ausgestoßen wird.

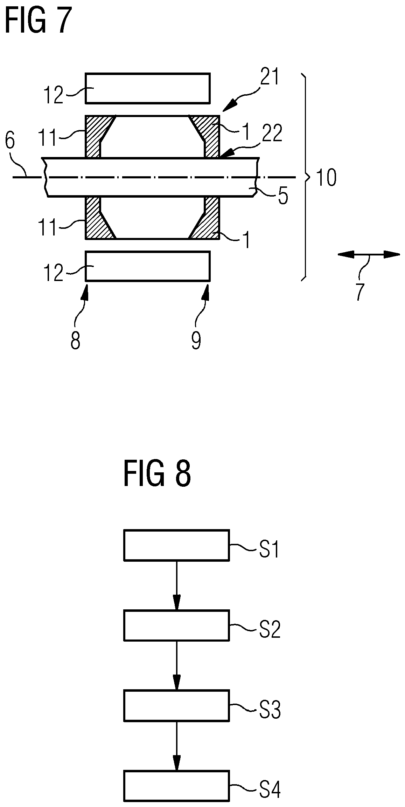

FIG 7 zeigt eine dynamoelektrische rotatorische Maschine 10 mit dem Rotor 11. Die Figur zeigt einen Stator 12, die Welle 5 sowie die Rotorachse 6. In Axialrichtung 7 betrachtet, weist der Rotor 11 am vorderen axialen Ende 8 ein Stützelement 1 auf. Ferner zeigt der Rotor 11 am hinteren axialen Ende 9 ein Stützelement 1.

FIG 8 zeigt ein Verfahren zur Herstellung des Rotors 11, aufweisend einen konzentrisch zur Rotorachse angeordneten Rotorkern, wobei der Rotorkern Nuten aufweist.

In einem Verfahrensschritt S1 erfolgt eine Bereitstellung des Rotorkerns.

In einen Verfahrensschritt S2 erfolgt ein Füllen der Nuten 3 mit einem elektrisch leitenden Material. Hierbei können die Nuten 3 mit vorgefertigten Stäben gefüllt werden oder mittels Druckguss gefüllt werden. Auch eine Kombination von vorgefertigten Stäben oder anderen Einlegeteilen und Druckguss ist möglich.

In einem Verfahrensschritt S3 erfolgt ein Aufbringen von elektrisch leitendem Material am vorderen und/oder hinteren axialen Ende der Nuten 3 zur Bildung eines vorderen bzw. hinteren Rings 2. Vorteilhaft erfolgt dies mittels Druckguss.

In einem Verfahrensschritt S4 erfolgt ein Anpressen des Stützelements 1. Das Stützelement 1 wird vorteilhaft während des Aufpressvorgangs auf der Welle geführt. Durch die bereits beschriebene Schrägung des Rings 2 und des Stützelements 1 wird eine Unrundheit des, insbesondere gegossenen, Kurzschlussrings 2 durch das Stützelement 1 korrigiert sowie eine Koaxialität des gesamten Kurzschlussrings 2 zur Welle 5 und somit zum Rotorpaket verbessert.

Vorteilhaft wird das Stützelement 1 auf eine Welle aufgeschrumpft und mit Kraft auf den Kurzschlussring 2 axial angepresst. Somit liegen die vorzugsweise axial nach innen gerichteten Flächen des Stützelements 1 und die Außenflächen des Kurzschlussrings 2 fest aneinander. Vorzugsweise wird eine Fügekraft ca. 20 bis 30 sec. gehalten, um eine volle Anlage zu gewährleisten. Vorteilhaft wird eine Fügekraft von ca. 30t bei einem Kurzschlussring von 130 bis 170mm Durchmesser, insbesondere 150mm, angewendet. Vorzugsweise ist das Stützelement zum Aufschrumpfen auf ca. 120°C erwärmt.

Die Erfindung bietet den Vorteil, dass eine Gusshaut, welche sich beim Druckguss des Kurzschlussrings bildet, den Kurzschlussring verfestigt.

Der durch das Verfahren hergestellte Rotor verringert das Risiko von Materialverschiebungen aufgrund von Fliehkraftbelastungen aufgrund der Festigkeit des Stützelements deutlich.

## Patentansprüche

1. Rotor (11) einer dynamoelektrischen rotatorischen Maschine (10), aufweisend:
- einen konzentrisch zur Rotorachse (6) angeordneten Rotorkern (4), wobei der Rotorkern Nuten (3) aufweist, wobei die Nuten (3) mit zumindest einem elektrisch leitenden Material gefüllt sind,
- am vorderen axialen Ende (8) der Nuten (3) einen konzentrisch zur Rotorachse (6) angeordneten vorderen Ring (2), wobei der vordere Ring (2) zumindest ein elektrisch leitendes Material aufweist,
- am hinteren axialen Ende (9) der Nuten einen konzentrisch zur Rotorachse (6) angeordneten hinteren Ring (2), wobei der hintere Ring zumindest ein elektrisch leitendes Material aufweist,
wobei eine dem Rotorkern (3) abgewandte Fläche des vorderen und/oder hinteren Rings (2) zumindest teilweise eine Schrägung in Axialrichtung von einem Außenumfang (21) zu einem Innenumfang (22) des Rings (2) mit einem Schrägungswinkel (α) aufweist,
- wenigstens ein Stützelement (1), wobei das Stützelement (1) derart ausgebildet ist, dass das Stützelement (1) zumindest teilweise formschlüssig mit dem Ring (2) verbunden ist, **dadurch gekennzeichnet, dass** der Schrägungswinkel (α) einen Wert von 3° bis 30° aufweist, dass das Stützelement (1) axial an den Ring (2) angepresst ist, wobei das Stützelement (1) auf eine Welle (5) abgestützt ist und dass ein radiales Ende des Stützelements (1) mit einem radialen Ende des Rings (2) abschließt.

2. Rotor (11) nach Anspruch 1, wobei das Stützelement (1) an einer dem Ring (2) zugewandten Fläche wenigstens einen Abschnitt aufweist, welcher eine Schrägung in Axialrichtung (7) vom Außenumfang zum Innenumfang mit einem zum Schrägungswinkel (α) wechselwinkligen Schrägungswechselwinkel (α') aufweist.

3. Rotor (11) nach einem der vorhergehenden Ansprüche, wobei das Stützelement (1) ein Material mit einer Zugfestigkeit von 800 N/mm² bis 1200 N/mm², insbesondere 1000 N/mm², aufweist.

4. Rotor (11) nach einem der vorhergehenden Ansprüche, wobei das Stützelement (1) Stahl aufweist.

5. Rotor (11) nach einem der vorhergehenden Ansprüche, wobei die dem Rotorkern (4) abgewandte Fläche des vorderen und/oder hinteren Rings (2) wenigstens einen ersten Bereich, aufweisend eine erste Teilschrägung in Axialrichtung von einem Außenumfang zu einem Innenumfang des Rings (2) mit einem ersten Teilschrägungswinkel (β), und wenigstens einen zweiten Bereich, aufweisend eine zweite Teilschrägung in Axialrichtung von einem Außenumfang zu einem Innenumfang des Rings (2) mit einem zweiten Teilschrägungswinkel (γ) aufweist, wobei sich der erste Teilschrägungswinkel (β) und der zweite Teilschrägungswinkel (γ) unterscheiden.

6. Rotor (11) nach Anspruch 5, wobei das Stützelement (1) an der dem Ring (2) zugewandten Fläche wenigstens einen ersten Bereich aufweist, welcher eine Schrägung in Axialrichtung vom Außenumfang zum Innenumfang mit einem zum ersten Teilschrägungswinkel (β) wechselwinkligen Teilschrägungswechselwinkel (β`) aufweist, wobei das Stützelement (1) an der dem Ring (2) zugewandten Fläche wenigstens einen zweiten Bereich aufweist, welcher eine Schrägung in Axialrichtung vom Außenumfang zum Innenumfang mit einem zum zweiten Teilschrägungswinkel (γ) wechselwinkligen Teilschrägungswechselwinkel (γ') aufweist.

7. Rotor (11) nach einem der vorhergehenden Ansprüche, wobei das Stützelement (1) mittels Presspassung mit einer Welle (5) verbindbar ist.

8. Rotor (11) nach einem der vorhergehenden Ansprüche, wobei das Stützelement (1) wenigstens eine Aussparung (13) und/oder wenigstens eine Aufdickung, insbesondere zur Beseitigung einer Unwucht, aufweist.

9. Dynamoelektrische rotatorische Maschine (10), insbesondere Asynchronmaschine, aufweisend einen Rotor (11) nach einem der Ansprüche 1 bis 8.

10. Verfahren zur Herstellung eines Rotors (11), nach einem der Ansprüche 1 bis 8, aufweisend einen konzentrisch zur Rotorachse (6) angeordneten Rotorkern (4), wobei der Rotorkern (4) Nuten (3) aufweist, für eine dynamoelektrische rotatorische Maschine (10), mit folgenden Schritten:
- Bereitstellung des Rotorkerns (3),
- Füllen der Nuten (3) mit zumindest einem elektrisch leitenden Material,
- Aufbringen von zumindest einem elektrisch leitenden Material am vorderen (8) und hinteren (9) axialen Ende der Nuten (3) zur Bildung eines vorderen bzw. hinteren Rings (2) mittels einer Gestaltungsvorrichtung, wobei die Gestaltungsvorrichtung derart ausgeführt ist, dass eine dem Rotorkern (3) abgewandte Fläche des vorderen und/oder hinteren Rings (2) zumindest teilweise eine Schrägung in Axialrichtung von einem Außenumfang zu einem Innenumfang des Rings (2) mit einem Schrägungswinkel (α) erhält, wobei der Schrägungswinkel (α) einen Wert von 3° bis 30° aufweist,
- Anpressen eines Stützelements (1), wobei das Stützelement (1) axial an den Ring (2) angepresst wird, wobei das Stützelement (1) auf eine Welle (5) abgestützt ist und wobei ein radiales Ende des Stützelements (1) mit einem radialen Ende des Rings (2) abschließt.

11. Verfahren nach Anspruch 10, wobei das Stützelement (1) auf eine Welle (5) aufgeschrumpft wird.

12. Verfahren nach einem der Ansprüche 10 oder 11, wobei das Stützelement (1) zum Aufschrumpfen auf eine Temperatur von 100 bis 140°C, vorzugsweise 120°C, erwärmt wird.

13. Verfahren nach einem der Ansprüche 10 bis 12, wobei das Stützelement (1) mit einer Fügekraft von 20 bis 40 t, vorzugsweise 30 t, aufgepresst wird.

## Claims

1. Rotor (11) of a dynamo-electric rotary machine (10), having:
- a rotor core (4) arranged concentrically relative to the rotor axis (6), wherein the rotor core has slots (3), wherein the slots (3) are filled with at least one electrically conductive material,
- a front ring (2) arranged concentrically relative to the rotor axis (6) at the front axial end (8) of the slots (3), wherein the front ring (2) comprises at least one electrically conductive material,
- a rear ring (2) arranged concentrically relative to the rotor axis (6) at the rear axial end (9) of the slots, wherein the rear ring comprises at least one electrically conductive material,
wherein a surface of the front and/or rear ring (2) facing away from the rotor core (3) at least partially has a bevel in an axial direction from an outer circumference (21) to an inner circumference (22) of the ring (2), with a bevel angle (α) ,
- at least one support element (1), wherein the support element (1) is designed in such a way that the support element (1) is at least partially connected to the ring (2) with a positive fit, **characterised in that** the bevel angle (α) has a value of 3° to 30°, the support element (1) is pressed onto the ring (2) axially, wherein the support element (1) is supported on a shaft (5) and a radial end of the support element (1) terminates at a radial end of the ring (2).

2. Rotor (11) according to claim 1, wherein the support element (1) has, at a surface facing toward the ring (2), at least one section which has a bevel in an axial direction (7) from the outer circumference to the inner circumference, with a bevel alternate angle (α') which is an alternate angle to the bevel angle (α).

3. Rotor (11) according to one of the preceding claims, wherein the support element (1) comprises a material having a tensile strength of 800 N/mm² to 1200 N/mm², in particular 1000 N/mm².

4. Rotor (11) according to one of the preceding claims, wherein the support element (1) comprises steel.

5. Rotor (11) according to one of the preceding claims, wherein the surface of the front and/or rear ring (2) facing away from the rotor core (4) has at least one first region having a first part-bevel in an axial direction from an outer circumference to an inner circumference of the ring (2), with a first part-bevel angle (β), wherein at least one second region having a second part-bevel in an axial direction from an outer circumference to an inner circumference of the ring (2), with a second part-bevel angle (γ), wherein the first part-bevel angle (β) and the second part-bevel angle (γ) differ.

6. Rotor (11) according to claim 5, wherein the support element (1) has, at the surface facing toward the ring (2), at least one first region having a bevel in an axial direction from the outer circumference to the inner circumference, with a part-bevel alternate angle (β') which is an alternate angle to the first part-bevel angle (β), and the support element (1) has, at the surface facing toward the ring (2), at least one second region having a bevel in an axial direction from the outer circumference to the inner circumference, with a part-bevel alternate angle (γ') which is an alternate angle to the second part-bevel angle (γ).

7. Rotor (11) according to one of the preceding claims, wherein the support element (1) can be connected to a shaft (5) by means of an interference fit.

8. Rotor (11) according to one of the preceding claims, wherein the support element (1) has at least one recess (13) and/or at least one thickening, in particular for the purpose of correcting an imbalance.

9. Dynamo-electric rotary machine (10), in particular an asynchronous machine, having a rotor (11) according to one of claims 1 to 8.

10. Method for producing a rotor (11), according to one of claims 1 to 8, having a rotor core (4) that is arranged concentrically relative to the rotor axis (6), wherein the rotor core (4) has slots (3), for a dynamo-electric rotary machine (10), comprising the following steps:
- providing the rotor core (3),
- filling the slots (3) with at least one electrically conductive material,
- depositing at least one electrically conductive material at the front (8) and rear (9) axial end of the slots (3) in order to form a front and/or rear ring (2) by means of a shaping device, wherein the shaping device is embodied in such a way that a surface of the front and/or rear ring (2) facing away from the rotor core (3) is at least partially given a bevel in an axial direction from an outer circumference to an inner circumference of the ring (2), with a bevel angle (α), wherein the bevel angle (α) has a value of 3° to 30°,
- pressing a support element (1) on, wherein the support element (1) is pressed onto the ring (2) axially, wherein the support element (1) is supported on a shaft (5) and wherein a radial end of the support element (1) terminates at a radial end of the ring (2).

11. Method according to claim 10, wherein the support element (1) is shrink-fitted onto a shaft (5).

12. Method according to one of claims 10 or 11, wherein the support element (1) is heated up to a temperature of 100°C to 140°C, preferably 120°C, for the purpose of shrink-fitting.

13. Method according to one of claims 10 to 12, wherein the support element (1) is pressed on with a bonding force of 20 to 40 t, preferably 30 t.

## Revendications

1. Rotor (11) d'une machine (10) dynamoélectrique tournante, comportant :
- un noyau (4) rotorique disposé concentriquement à l'axe (6) du rotor, dans lequel le noyau rotorique a des encoches (3), les encoches (3) étant remplies d'au moins un matériau conducteur de l'électricité,
- à l'extrémité (8) axiale avant des encoches (3), un anneau (2) avant disposé concentriquement à l'axe (6) du rotor, l'anneau (2) avant ayant au moins un matériau conducteur de l'électricité,
- à l'extrémité (9) axiale arrière des encoches, un anneau (2) arrière disposé concentriquement à l'axe (6) du rotor, l'anneau arrière ayant au moins un matériau conducteur de l'électricité,
dans lequel une surface, non tournée vers le noyau (3) rotorique, de l'anneau (2) avant et/ou arrière, a au moins en partie une inclinaison d'un angle (α) d'inclinaison dans la direction axiale d'un pourtour (21) extérieur à un pourtour (22) intérieur de l'anneau (2),
- au moins un élément (1) d'appui, l'élément (1) d'appui étant constitué de manière à ce que l'élément (1) d'appui soit relié au moins en partie par complémentarité de forme à l'anneau (2), **caractérisé en ce que** l'angle (α) d'inclinaison a une valeur de 3° à 30°, **en ce que** l'élément (1) d'appui est pressé axialement sur l'anneau (2), dans lequel l'élément (1) d'appui est appuyé sur un arbre (5) et **en ce qu'**une extrémité radiale de l'élément (1) d'appui se termine avec une extrémité radiale de l'anneau (2).

2. Rotor (11) suivant la revendication 1, dans lequel l'élément (1) d'appui a, sur l'une des surfaces, tournée vers l'anneau (2), au moins une partie, qui a une inclinaison dans la direction (7) axiale du pourtour extérieur au pourtour intérieur d'un angle (α') alternatif d'inclinaison alternant en angle avec l'angle (α) d'inclinaison.

3. Rotor (11) suivant l'une des revendications précédentes, dans lequel l'élément (1) d'appui comporte un matériau ayant une résistance de la traction de 800 N/mm² à 1200 N/mm², en particulier de 1000 N/mm².

4. Rotor (11) suivant l'une des revendications précédentes, dans lequel l'élément (1) d'appui a de l'acier.

5. Rotor (11) suivant l'une des revendications précédentes, dans lequel la surface, non tournée vers le noyau (4) rotorique, de l'anneau (2) avant et/ou arrière, a au moins une première partie ayant une inclinaison partielle dans la direction axiale d'un pourtour extérieur à un pourtour intérieur de l'anneau (2) en ayant un premier angle (β) d'inclinaison partielle, et au moins une deuxième partie ayant une deuxième inclinaison partielle dans la direction axiale d'un pourtour extérieur à un pourtour intérieur de l'anneau (2) en ayant un deuxième angle (γ) d'inclinaison partielle, le premier angle (β) d'inclinaison partielle et le deuxième angle (γ) d'inclinaison partielle étant différents.

6. Rotor (11) suivant la revendication 5, dans lequel l'élément (1) d'appui a, sur la surface, tournée vers l'anneau (2), au moins une première partie, qui a une inclinaison dans la direction axiale du pourtour extérieur au pourtour intérieur en ayant un angle (β') alterné d'inclinaison partielle alternant en angle avec le premier angle (β) d'inclinaison partielle, dans lequel l'élément (1) d'appui a, sur la surface, tournée vers l'anneau (2), au moins une deuxième partie, qui a une inclinaison dans la direction axiale du pourtour extérieur au pourtour intérieur en ayant un angle (γ') alterné d'inclinaison partielle alternant en angle avec le deuxième angle (γ) d'inclinaison partielle.

7. Rotor (11) suivant l'une des revendications précédentes, dans lequel l'élément (1) d'appui peut être relié à un arbre (5) au moyen d'un ajustement à la presse.

8. Rotor (11) suivant l'une des revendications précédentes, dans lequel l'élément (1) d'appui a au moins un évidement (13) et/ou au moins un épaississement, en particulier pour supprimer un balourd.

9. Machine (10) tournante dynamoélectrique, en particulier machine asynchrone, comportant un rotor (11) suivant l'une des revendications 1 à 8.

10. Procédé de fabrication d'un rotor (11) suivant l'une des revendications 1 à 8, ayant un noyau (4) rotorique disposé concentriquement à l'axe (6) de rotor, le noyau (4) rotorique ayant des encoches (3), pour une machine (10) dynamoélectrique tournante, comprenant les stades suivants :
- on se procure le noyau (3) rotorique,
- on remplit les encoches (3) d'au moins un matériau conducteur de l'électricité,
- on dépose au moins un matériau conducteur de l'électricité à l'extrémité axiale avant (8) et arrière (9) des encoches (3), pour la formation d'un anneau (2) avant et arrière au moyen d'un dispositif de conformation, dans lequel le dispositif de conformation est réalisé de manière à ce qu'une surface, non tournée vers le noyau (3) rotorique, de l'anneau (2) avant et/ou arrière, reçoive au moins en partie une inclinaison dans la direction axiale d'un pourtour extérieur à un pourtour intérieur de l'anneau (2) en ayant un angle (α) d'inclinaison, dans lequel l'angle (α) d'inclinaison a une valeur allant de 3° à 30°,
- on presse un élément (1) d'appui, dans lequel on presse l'élément (1) d'appui axialement sur l'anneau (2), dans lequel l'élément (1) d'appui est appuyé sur un arbre (5) et dans lequel une extrémité radiale de l'élément (1) d'appui se termine avec une extrémité radiale de l'anneau (2).

11. Procédé suivant la revendication 10, dans lequel on frette l'élément (1) d'appui sur un arbre (5).

12. Procédé suivant l'une des revendications 10 ou 11, dans lequel on porte l'élément (1) d'appui pour le frettage à une température de 100 à 140° C, de préférence à 120° C.

13. Procédé suivant l'une des revendications 10 à 12, dans lequel on presse l'élément (1) d'appui avec une force de jonction de 20 à 40 t, de préférence de 30 t.
